# EUROPEAN PATENT APPLICATION

(11) **EP 1 130 891 A2**
(43) Date of publication of application: **05.09.2001**
(21) Application number: 01301463.4
(22) Date of filing: 19.02.2001
(51) Int. Cl.: H04M 1/725, H04Q 7/32

(54) **Improved human interface for wireless telephone stations**

(30) Priority: 02.03.2000 US 517027
(71) Applicant: LUCENT TECHNOLOGIES INC., Murray Hill, New Jersey 07974-0636 (US)
(72) Inventor: Goss, Stephen Clifford, Wheaton, Illinois 60187 (US); Light, Jeffrey Ross, Lincolnwood, Illinois 60712 (US); Liu, Chung-Zin, Naperville, Illinois 60565 (US); Salvador, Omar Hernando, Wheaton, Illinois 60187 (US); Shah, Gitesh P., Naperville, Illinois 60565 (US); Stockert, Mark Kevin, 07-02 Ardmore View (SG); Strom, Kenneth Wayne, Naperville, Illinois 60560 (US); Varvaro, Charles, Glendale Heights, Illinois 60139 (US); Wilson, Randall Joe, Naperville, Illinois 60540 (US)
(74) Representative: Buckley, Christopher Simon Thirsk

(57) **Abstract**

In apparatus and a method for providing information to a user of a mobile station the Mobile Station (MS) is equipped with a pre-recorded announce-ment generator. A Mobile Switching Center (MSC) sends a command to an MS over a control channel requesting the MS to generate a selected pre-recorded announcement. The announcement generator generates the announcement, and plays it into the earphone receiver of the MS.

Advantageously, the MS can play an announcement without requiring a voice channel to the MSC.

## Description

### Related Application:

This Application is related to an Application entitled, "Enhanced Wireless Radio Channel Utilization", being filed concurrently by the same inventor and being assigned to the same Assignee.

### Technical Field:

This invention relates to an improved interface for communications to wireless telephone stations.

### Problem:

A cellular wireless telephone mobile station (MS), is connected to a host controlling switch such as a serving mobile switching center (MSC), by two types of radio facilities: a traffic (voice or data) channel and a shared control channel. The shared control channel is used for sending control and signaling information between the MS and the MSC. The signals from the MSC are conveyed to a user of an MS by data signals which cause locally generated tones to be heard, and/or which cause a data display , (usually of alpha-numeric characters), to be generated for the user to view. A problem of the prior art is that where there is no available traffic channel to the MS, the combinations of tones and displays are not effective in alerting a caller of certain types of signals - especially, if the receiver is up to the user's ear and/or lighting is such that the display is difficult to read, or if the user is using a hands free telephone.

### Solution:

Applicants have further analyzed the types of situations in which it is necessary to alert a caller of some condition. In many such cases, no traffic channel to the MS is available, for example: the when case all traffic channels to the serving base station(s) are occupied. Under these circumstances, only the control channel is available, and as explained above, the use of displays and tones associated with the use of the control channel is frequently unsatisfactory. Applicants have overcome this limitation in accordance with their invention, wherein an announcement generator is made part of an MS, the announcement generator having the capability of generating a plurality of pre-recorded announcements; and wherein a control message from the MSC triggers the announcement generator to announce a selected one, or ones, of the pre-recorded announcements. Advantageously, even when no traffic channel is available between the MS and the MSC, announcements can be provided to the user of the MS, the announcements being selected by the MSC.

In accordance with Applicants' invention, the pre-recorded announcements are stored in the announcement generator. In accordance with one feature of Applicants' invention, such announcements can be sent to the announcement generator by transmitting the announcement over a traffic channel, or over an extended period of time, over the control channel from the MSC. Advantageously, such an arrangement provides for the capability to add announcements associated with new features, or to delete announcements no longer needed. The term announcements as used herein includes voice messages, tones, spoken numbers and individual words.

In accordance with another feature of Applicants' invention, specific data such as the ten numerals, can be stored as announcements in the announcement generator, and a multi-part announcement can be played by stringing together word and data announcements, as specified in one or more data control messages. Advantageously, this arrangement allows users to receive announcements controlled by a serving MSC even when no traffic channel to the MSC is available. Advantageously, voice channels, even if available, need not be tied up for the provision of such announcements.

### Brief Description of the Drawing(s):

Figure 1 is a block diagram, illustrating Applicants' invention; and
Figure 2 is a flow diagram, illustrating the operation of Applicants' invention.

### Detailed Description:

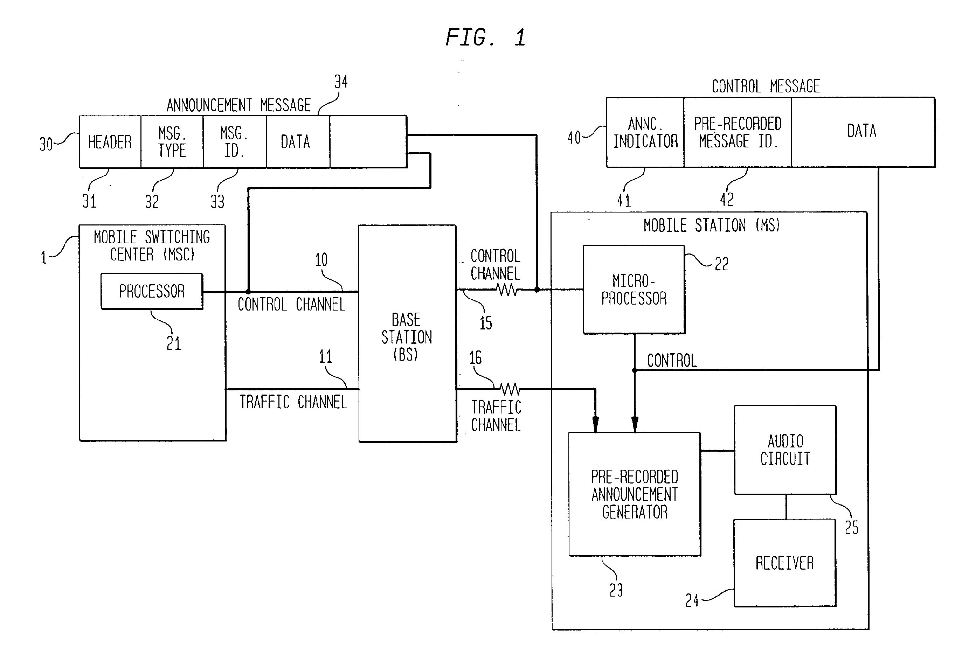

Figure 1 is a block diagram, illustrating the operation of Applicants' invention. A host controlling switch, in this case, a mobile switching center (MSC) 1, is connected via a base station (BS) 2, to a mobile station, (MS) 3. The MSC is controlled by a processor 21 for generating messages to the MS. The connections are via a control channel 10 between the MSC and the BS, and a wireless control channel 15 between the BS and MS, and when available, a voice (traffic) channel 11 between the MSC and BS, and a corresponding wireless traffic channel 16 between the BS and the MS. The MS includes a processor 22, the micro-processor that is part of every modern MS, a receiver 24, which the MS user places near the his/her ear in order to hear speech signals, and in accordance with Applicants' invention, a new block, a pre-recorded announcement generator 23, connected via an audio circuit 25, for converting the output of the generator to a signal for driving the receiver to the receiver. The pre-recorded announcement generator is similar to the types of voice devices available in many toys which allow the toy to speak one of several utterances, depending upon which button is pushed. In this case, the announcement generator 23 is controlled by processor 22, to select an appropriate pre-recorded announcement.

In accordance with one feature of Applicants' invention, a pre-recorded announcement generator is also able to accept new announcements delivered over a voice band channel, such as channel 16, or over control channel 15. A control message accompanying a new announce-ment contains the identifier for the new announcement. This creates greater flexibility for the MS to respond to new features requiring new announcements.

When the MSC recognizes the need to play an announcement to the MS user, the MSC sends a message 30 over control channels 10 and 15. The message 30 includes the conven-tional header 31, an indication of the type of message 32, and pre-recorded message identifier 33 to allow processor 22 to select one of the pre-recorded announcements. In addition, the message 30 may include data 34, which is interpreted by the processor-22 to select data announcements, (such as one of the 10 decimal numerals). Under the control of the processor 22, a string of announcements can be generated by the pre-recorded announcement genera-tor. The processor 22 receives message 30, and generates a message 40, or its equivalent, including an announcement indicator 41, and one or more pre-recorded message identifiers 42. In response to receipt of message 40, the pre-recorded announcement generator generates the selected pre-recorded announcement, and transmits this announcement to the receiver 24, so that the user can hear the announcement.

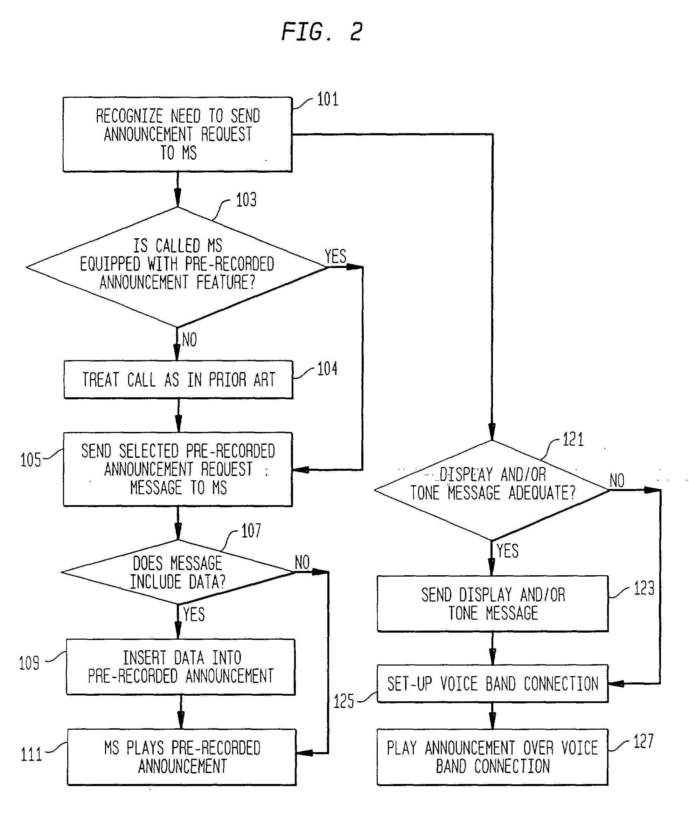

Figure 2 is a flow diagram, illustrating the operation of Applicants' invention. An MSC recognizes the need to send an announcement request to an MS, (Action Block 101). The MSC tests whether the called MS is equipped with the pre-recorded announcement feature, (Test 103). If the called MS is not equipped with the pre-recorded announcement feature, then the arrangements of the prior art are used, (Action Block 104). If the MS is equipped with the pre-recorded announcement feature, then the MSC sends a selected pre-recorded announcement request message to the MS, (Action Block 105). Test 107 is used to determine whether the message includes data. If not, the message is played, (Action Block 111). If a message does include data, then the data is inserted into the pre-recorded announcement, (Action Block 109). One easy way of doing this is to break up the announcement into seg-ments, including the data segment, and trigger each segment sequentially. Then, the message is played, (Action Block 111).

If an announcement is required that is not stored in the MS, then a voice channel connection is made as in the prior art. Test 121 is used to determine whether a display and/or tone message will satisfy the requirement recognized in Block 101. If so, then the display, and/or tone control message is sent, (Action Block 123). If an announcement is actually required, then a voice channel connection is set up to the MS, (Action Block 125), and the announcement is played from the MSC to the MS, (Action Block 127).

This arrangement can be used to concatenate a plurality of messages. A concatenated announcement can be triggered by a combination of several messages and concatenated words or phrases within one message. For example, a message type can trigger a phrase, and the data field of the message can specify a number. The plurality of concatenated messages can summarize information. For example, a concatenated message might indicate a type (weather report), data (temperature), special indicators (rain) to create an information announcement such as: "Today's temperature range is 50 to 70 degrees, wind gusts up to 20 mph, and 2 inches of rain are forecast". Such a message can then be transmitted without using a traffic channel.

The above is a description of one preferred embodiment of Applicants' invention. Many other embodiments which do not depart from the scope of the invention will be apparent to those of ordinary skill in the art. The invention is only limited by the attached Claims.

## Claims

1. Apparatus for providing information to a user of a mobile telecommunications station comprising:
a processor;
a pre-recorded announcement generator; and
a voice band receiver;
said processor responsive to a message received over a control channel from a host controlling switch, for generating a control signal to said pre-recorded announcement generator;
said pre-recorded announcement generator responsive to said control signal for generating one of a plurality of pre-recorded announcements; and
transmitting said pre-recorded announcement to said receiver.

2. The apparatus of Claim 1, wherein said pre-recorded announcement generator is also responsive to signals received from said host controlling switch for recording additional announcements.

3. The apparatus of Claim 1, wherein said processor is responsive to a command received from said host controlling switch for generating a series of signals to said pre-recorded announcement generator;
wherein said pre-recorded announcement generator generates a series of concatenated announcements in response to said signals from said processor.

4. A method of providing an announcement to a user of a mobile telecommunications station, comprising the steps of:
providing said mobile station with a pre-recorded announcement gene-rator; transmitting a command from a host controlling switch over a control channel to said mobile station, said command comprising an identifi-cation of one of a plurality of pre-recorded announcements stored in said announcement generator; and
responsive to receipt of said command generating said announcement corresponding to said one of said announcements specified in said command.

5. The method of Claim 4, further comprising the steps of:
establishing a voice band connection between said host controlling switch and said mobile station; and
responsive to receipt of another command from said host controlling switch, recording an additional announcement received over said voice band connection, and identified in said another command.

6. The method of Claim 4, further comprising the step of:
responsive to receipt of another command from said host controlling switch, recording an additional announcement received over said control channel and identified in said another command.

7. The method of Claim 4, wherein the step of generating an announcement comprises the step of generating a plurality of concatenated announcements based on data received in said command.
